**Europäisches Patentamt**

(19) **European Patent Office**

**Office européen des brevets**

(11) Veröffentlichungsnummer: **0 149 161**
**B1**

(12) # EUROPÄISCHE PATENTSCHRIFT

(45) Veröffentlichungstag der Patentschrift:
**19.11.87**

(51) Int. Cl.⁴: **B 62 D 55/215**

(21) Anmeldenummer: **84115530.2**

(22) Anmeldetag: **15.12.84**

(54) Gleiskette für Kettenfahrzeuge.

(30) Priorität: **16.01.84 DE 3401254**

(43) Veröffentlichungstag der Anmeldung:
**24.07.85 Patentblatt 85/30**

(45) Bekanntmachung des Hinweises auf die Patenterteilung:
**19.11.87 Patentblatt 87/47**

(84) Benannte Vertragsstaaten:
**AT BE CH DE FR GB IT LI LU NL SE**

(56) Entgegenhaltungen:
**DE - C - 2 747 271**
**US - A - 1 774 815**
**US - A - 4 204 583**

(73) Patentinhaber: **Hoesch Aktiengesellschaft,**
**Eberhardstrasse 12, D-4600 Dortmund 1 (DE)**

(72) Erfinder: **Büllesbach, Peter, Luisenstrasse 33a,**
**D-5632 Wermelskirchen (DE)**
Erfinder: **Steinborn, Wilhelm, Dorfmühlenstrasse 7,**
**D-5630 Remscheid (DE)**

(74) Vertreter: **Happe, Otto, Dipl.-Ing., Isselburger**
**Strasse 12, D-5000 Köln 60 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Gleiskette für Kettenfahrzeuge, bestehend aus einer Folge von Kettengliedern, die durch elastische Verbindungsstücke miteinander verbunden sind, wobei die Verbindungsstücke mit ihren T-förmig ausgebildeten Enden in entsprechend T-förmig ausgebildete Nuten der Kettenglieder eingreifen.

Da Gleisketten als endlose, über an den Enden des Fahrzeugs vorgesehene Umlenkrollen geführte Ketten ausgebildet sind, die auf dem Boden abrollen, muss die Verbindung der einzelnen Kettenglieder elastisch ausgebildet sein. Bei einer bekannten Gleiskette für Kettenfahrzeugen weisen die Verbinder an ihren beiden Enden Querbalken auf, so dass die Enden der Verbinder T-förmig ausgebildet sind (DE-C-2747271). Die T-förmigen Enden greifen in entsprechend T-förmig ausgebildete Flachführungen der Kettenglieder ein. Die Verbinder, die aus elastischem Werkstoff, beispielsweise Gummi, bestehen, erfordern zur Stabilisierung Stützkörper und Verstärkungen. Ferner weist diese bekannte Gleiskette den Nachteil auf, dass die T-förmigen Enden der Verbinder in den Flachführungen in Kettenlängsrichtung eine verhältnismässig grosse Bewegungsfreiheit haben. Dies führt durch Addition der Einzelbewegungen zu einer beträchtlichen Längenänderung der Gleiskette, wodurch diese sich zu einem schwingenden System entwickelt. Hierdurch werden die Fahreigenschaften des Kettenfahrzeugs erheblich verschlechtert und es kann ein erhöhter Verschleiss eintreten. Ein weiterer Nachteil der bekannten Gleiskette ergibt sich dadurch, dass an die Verbinder Funktionselemente, beispielsweise Führungszähne, angebracht sind, die zu einer zusätzlichen Belastung der Verbinder führen.

Der Erfindung liegt die Aufgabe zugrunde, eine Gleiskette der eingangs genannten Art so auszubilden, dass sie die vorgenannten Nachteile nicht aufweist und ohne Nachgiebigkeit in Kettenlängsrichtung eine elastische Biegung der Gleiskette beim Umschlingen der Umlenkrollen zulässt.

Die Lösung der gestellten Aufgabe besteht darin, dass die Verbindungsstücke als einteilige Metallfedern ausgebildet sind. Die T-förmigen Enden der Verbindungsstücke liegen mit ihren sich gegenüberliegenden Flächen fest an den betreffenden Flächen der Nuten an, so dass keine Bewegungsfreiheit in Kettenlängsrichtung vorhanden ist. Andererseits ist aber die Elastizität der die Verbindungsstücke bildenden Metallfedern gross genug, um eine Biegung der Gleiskette zu ermöglichen.

In Ausgestaltung der Erfindung weist die Aussenkontur der Verbindungsstücke zwischen dem Mittelteil und den T-förmigen Enden einen konkaven Übergang auf, so dass sich ein günstiger Verlauf der Kraftlinien in den Verbindungsstücken ergibt.

In weiterer Ausgestaltung der Erfindung ist die Breite der Nuten grösser als die Breite der T-förmigen Enden der Verbindungsstücke und ist zwischen jedem Ende der Verbindungsstücke und der betreffenden Grundfläche der Nuten ein Spannelement angeordnet. Dieses Spannelement gewährleistet, dass die Enden der Verbindungsstücke sicher an den betreffenden Flächen der Nuten anliegen, was einen sehr ruhigen Lauf und eine sehr genaue Führung der Kette hervorruft.

Nach weiteren Merkmalen der Erfindung bestehen die Spannelemente aus Gummi oder einem elastischen Kunststoff; sie weisen an ihren der Grundfläche der Nut zugewandten Seite eine Gleitleiste auf, die das Einführen der Spannelemente in die Nuten erleichtert; und sie sind vorgespannt.

Bei einer bevorzugten Ausführungsform der Erfindung ist der Mittelteil jedes Verbindungsstückes an seiner Ober- und Unterseite mit einer Schicht aus elastischem Werkstoff versehen. Dadurch wird ein Eindringen von abrasiven Stoffen verhindert.

Die Vorteile der erfindungsgemässen Gleiskette gegenüber den bekannten Gleisketten bestehen darin, dass die Gleiskette keine zu einem Schwingen der Kette führende Längung erfährt und dass durch die eindeutige Anlage der T-förmigen Enden der Verbindungsstücke an den betreffenden Flächen der Nuten keine Bewegung zwischen den Enden der Verbindungsstücke und den Nuten und somit kein Verschleiss auftritt. Weiterhin kann bei der erfindungsgemässen Gleiskette der Abstand zwischen den einzelnen Kettengliedern verhältnismässig klein gewählt werden, was sich vorteilhaft auf das Abrollen der Kette auf dem Boden auswirkt.

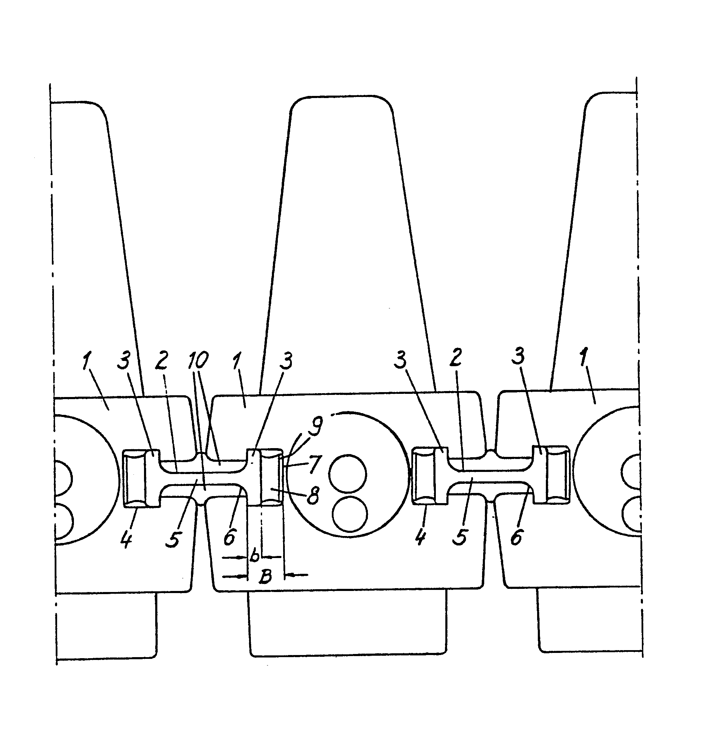

In der Zeichnung ist als Ausführungsbeispiel der Erfindung ein Abschnitt einer Gleiskette in Seitenansicht dargestellt.

Die dargestellte Gleiskette besteht aus einer Folge von Kettengliedern 1, die durch elastische Verbindungsstücke 2 miteinander verbunden sind. Die Verbindungsstücke 2, die als einteilige Metallfedern ausgebildet sind, weisen T-förmig ausgebildete Enden 3 auf, die in entsprechend T-förmig ausgebildete Nuten 4 der Kettenglieder 1 eingreifen. Die Aussenkontur der Verbindungsstücke 2 weist zwischen dem Mittelteil 5 und den T-förmigen Enden 3 einen konkaven Übergang auf.

Die Breite B des T-förmigen Teils der Nuten 4 ist grösser als die Breite b der T-förmigen Enden 3 der Verbindungsstücke 2, so dass zwischen den Enden 3 und der Grundfläche 7 der Nuten 4 ein Raum verbleibt, in den jeweils ein Spannelement 8 eingesetzt ist. Die Spannelemente 8, die an ihrer der Nut 4 zugewandten Seite mit Gleitleisten 9 versehen sind, stehen unter einer Vorspannung, d.h. die Breite der Spannelemente 8 ist vor deren Einsetzen in die Nut 4 grösser als die Differenz der Breite B der Nuten 4 und der Breite b der T-förmigen Enden 3 der Verbindungsstücke 2.

Auf der Ober- und Unterseite des Mittelteils 5 jedes Verbindungsstückes 2 ist eine Schicht 10 aus elastischem Werkstoff vorgesehen.

## Patentansprüche

1. Gleiskette für Kettenfahrzeuge, bestehend aus einer Folge von Kettengliedern (1), die durch elastische Verbindungsstücke (2) miteinander verbunden sind, wobei die Verbindungsstücke mit ihren beiden T-förmig ausgebildeten Enden (3) in entsprechend T-förmig ausgebildete Nuten (4) der Kettenglieder eingreifen, dadurch gekennzeichnet, dass die Verbindungsstücke (2) als einteilige Metallfedern ausgebildet sind.

2. Gleiskette nach Anspruch 1, dadurch gekennzeichnet, dass die Aussenkontur der Verbindungsstücke (2) zwischen dem Mittelteil (5) und den T-förmigen Enden (3) einen konkaven Übergang (6) aufweist.

3. Gleiskette nach Anspruch 1 oder 2, dadurch gekennzeichnet, dass die Breite (B) der Nuten (4) grösser ist als die Breite (b) der T-förmigen Enden (3) der Verbindungsstücke (2) und dass zwischen jedem Ende (3) der Verbindungsstücke (2) und der betreffenden Grundfläche (7) der Nuten (4) ein Spannelement (8) angeordnet ist.

4. Gleiskette nach Anspruch 3, dadurch gekennzeichnet, dass die Spannelemente (8) aus Gummi oder einem elastischen Kunststoff bestehen.

5. Gleiskette nach Anspruch 4, dadurch gekennzeichnet, dass die Spannelemente (8) an ihrer der Grundfläche (7) der Nut (4) zugewandten Seite eine Gleitleiste (9) aufweisen.

6. Gleiskette nach Anspruch 4 oder 5, dadurch gekennzeichnet, dass die Spannelemente (8) vorgespannt sind.

7. Gleiskette nach einem der Ansprüche 1 bis 6, dadurch gekennzeichnet, dass der Mittelteil (5) jedes Verbindungsstückes (2) an seiner Ober- und Unterseite mit einer Schicht (10) aus elastischem Werkstoff versehen ist.

**Claims**

1. Track for track-laying vehicles, comprising a series of track links (1), which are connected to one another by elastic connecting members (2), the connecting members engaging with their two T-shaped ends (3) in corresponding T-shaped grooves (4) of the track links, characterised in that the connecting members (2) are formed as one-piece metal springs.

2. Track according to claim 1, characterised in that the external shape and of the connecting members (2) has a concave transition part (6) between the middle part (5) and the T-shaped ends (3).

3. Tracks according to claim 1 or 2, characterised in that the width (B) of the grooves (4) is greater than the width (b) of the T-shaped ends (3) of the connecting members (2) and that a biassing element (8) is arranged between each end (3) of the connecting member (2) and the corresponding bottom surface (7) of the grooves (4).

4. Track according to claim 3, characterised in that the biassing element (8) comprises rubber or an elastic plastics material.

5. Track according to claim 4, characterised in that the biassing element (8) has a slide strip (9) on its side directed towards the bottom surface (7) of the groove (4).

6. Track according to claim 4 or 5, characterised in that the biassing element (8) is pre-stressed.

7. Track according to any of claims 1 to 6, characterised in that the middle part (5) of each connecting member (2) is provided with a layer (10) of elastic material on its upper and lower sides.

**Revendications**

1. Chenille pour véhicules chenillés, comprenant une succession de maillons (1) qui sont assemblés l'un à l'autre par des pièces d'assemblage élastiques (2), les pièces d'assemblage venant s'engager, avec leurs deux extrémités (3) en forme de T, dans des rainures (4) des maillons ayant une forme correspondante en T, caractérisée en ce que les pièces d'assemblage (2) sont réalisées sous forme de ressorts métalliques d'une seule pièce.

2. Chenille selon la revendication 1, caractérisée en ce que le contour extérieur des pièces d'assemblage (2) comporte une transition concave (6) entre la partie centrale (5) et les extrémités en T (3).

3. Chenille selon la revendication 1 ou 2, caractérisée en ce que la largeur (B) des rainures (4) est supérieure à la largeur (b) des extrémités en T (3) des pièces d'assemblage (2) tandis que, entre chaque extrémité (3) des pièces d'assemblage (2) et la surface concernée (7) du fond des rainures (4), est disposé un élément de serrage (8).

4. Chenille selon la revendication 3, caractérisée en ce que les éléments de serrage (8) sont réalisés en caoutchouc ou en une matière synthétique élastique.

5. Chenille selon la revendication 4, caractérisée en ce que, sur leur face tournée vers la surface (7) du fond de la rainure (4), les éléments de serrage (8) comportent une languette de glissement (9).

6. Chenille selon la revendication 4 ou 5, caractérisée en ce que les éléments de serrage (8) sont mis en précontrainte.

7. Chenille selon une des revendications 1 à 6, caractérisée en ce que, sur sa face supérieure et sa face inférieure, la partie centrale (5) de chaque pièce d'assemblage (2) est pourvue d'une couche (10) de matière élastique.